# EUROPEAN PATENT APPLICATION

(11) **EP 2 849 119 A1**
(43) Date of publication of application: **18.03.2015**
(21) Application number: 13779506.8
(22) Date of filing: 13.03.2013
(51) Int. Cl.: G06K 17/00, G06F 3/06

(54) **DEVICE UNIT, ACCESS DEVICE, ACCESS SYSTEM, AND COMMUNICATION ESTABLISHING METHOD**

(30) Priority: 08.05.2012 JP 2012106421
(71) Applicant: Panasonic Corporation, Kadoma-shi, Osaka 571-8501 (JP)
(72) Inventor: MAEDA, Takuji, Osaka 540-6207 (JP); TOYOMA, Masayuki, Osaka 540-6207 (JP); KATO, Isao, Osaka 540-6207 (JP); NISHIOKA, Shinichiro, Osaka 540-6207 (JP); SENGA, Satoshi, Osaka 540-6207 (JP)
(74) Representative: Vigand, Philippe
(86) International application number: PCT/JP2013/001669
(87) International publication number: WO 2013/168336

(57) **Abstract**

A functional device (2) can communicate with an access apparatus (1). The functional device (2) includes an access controller (203) that controls an additional device (27) and obtains characteristic information of the additional device (27) at an initialization process of the additional device (27), a memory (211) that stores the obtained characteristic information, a communication unit that transmits and receives data to and from the access apparatus (1), and a communication controller (201) that transmits the characteristic information stored in the memory (211) to the access apparatus (1), when receiving a request for the initialization process from the access apparatus (1) through the communication unit after transferring an exclusive right to the access apparatus, the exclusive right being a right to exclusively control the additional device (27).

## Description

### Technical Field

The present disclosure relates to a functional device that processes a predetermined function, an access apparatus that is connected to the functional device by communication and controls the functional device, and an access system including the functional device and the access apparatus.

### Background Art

For recording media that store digital data such as music content and video data, there are various types such as magnetic disks, optical disks, and magneto-optical disks. Out of these recording media, a memory card that uses a semiconductor memory such as a flash memory as a recording element can achieve miniaturization of a recording medium, and thus, rapidly becomes popular mainly for compact portable devices such as digital still cameras and mobile phone terminals. Furthermore, recently, a semiconductor memory has started to be used not only for applications as removable media which can be removed such as conventional memory cards, but also for applications as device's built-in storage, e.g., a semiconductor memory such as a flash memory is built in a device and is used instead of a hard disk.

Meanwhile, due to the advances in wireless technology, the miniaturization, increase in functionality, and reduction in cost of LSIs for wireless such as 802.11 series, Bluetooth (registered trademark), are progressing. By this, wireless function has started to be provided to truly various terminals including not only mobile terminals such as mobile phones, Smartphones, and digital still cameras, but also stationary terminals such as TVs and hard disk recorders. As one application example thereof, there is proposed a memory card with wireless communication function where wireless function is provided to a conventional memory card (e.g., Patent Document 1). The memory card with wireless function has the same interface shape as conventional type memory cards, and thus, can share an interface with a host device having a slot for conventional memory cards. Accordingly, without mounting hardware and software resources for wireless communication to the host device side, the memory card with wireless function can support wireless communication at low cost.

Conventionally, posting of still images to a web service or the like need to be performed by removing a memory card from a digital still camera and then placing the memory card in a PC or the like. However, placing the memory card with wireless function in a digital still camera, posting of still images to a web service or the like can be directly performed from the digital still camera. As such, the memory card with wireless function enables a host device to be easily connected to a network.

Furthermore, providing wireless communication function to a memory card also enables a use case in which memory cards are directly wirelessly connected to each other to exchange files therebetween. By this, for example, still images shot at an event such as a field day, a wedding, and so on can be handed over to a person right there, and thus pictures can be exchanged more easily.

Furthermore, there is proposed a method in which a memory card itself is provided with only wireless function and reading and writing of data are performed by accessing mass storage such as an external hard disk through wireless communication (e.g., Patent Document 2). In this case, advantages that, for example, storage capacity can be easily added and a plurality of memory cards with wireless function can simultaneously access common storage can be received.

### Prior Art Documents

### Patent Documents

Patent Document 1: JP 2002-366919 A
Patent Document 2: Specification of US 2003/0018852 A

### Summary of Invention

### Problems to be Solved by the Invention

Conventionally, a functional device having a predetermined function (e.g., a memory card) and an access apparatus (e.g., a personal computer) are directly connected to each other by an electrical wiring line or the like, and the functional device is controlled by the access apparatus. In the present disclosure, the case is described in which a functional device such as a memory card having, for example, wireless communication function as described above is controlled by an access apparatus connected to the functional device through, for example, wireless communication.

For example, storage with wireless function in which a wireless module and an SD card are mounted is used as a functional device, and an access apparatus that is wirelessly connected to the functional device is assumed. In this case, the access apparatus which is an access source transmits an arbitrary SD command including reading and writing of data, to the SD card in the storage with wireless function through wireless communication. At this time, prior to access to the SD card in the functional device, the access apparatus performs the same process as an initialization process which is conventionally performed on an SD card, on the SD card in the functional device through a wireless connection.

Herein, the case will be considered in which the connection between the access apparatus and the functional device which are wirelessly connected to each other is, for example, disconnected once, and the access apparatus and the functional device are reconnected thereafter. In this case, it is considered that even if the SD card in the functional device is actually the same one before and after the reconnection, the conventional access apparatus performs the same initialization process every time a reconnection is established.

Therefore, when a communication environment, such as a wireless connection, is unstable, a request for an SD card initialization process is frequently issued from the access apparatus which is an access source to the functional device including the storage with wireless function. The SD card initialization process takes a relatively long time. Thus, when a request for an initialization process is frequently issued upon wireless connection, a problem of an increase in the processing time required to establish a wireless connection occurs.

When a conventional access apparatus and a functional device are directly connected to each other through wired communication, since the communication between the access apparatus and the functional device has high reliability, a problem such as that described above does not is a big issue.

The present disclosure provides a technique for reducing the frequency of an initialization process or the like for a function provided to a functional device such as external storage, when an access apparatus accesses the functional device through, for example, wireless communication.

### Means for Solving the Problems

A functional device according to the present disclosure can communicate with an access apparatus. The functional device includes an access controller that controls an additional device and obtains characteristic information of the additional device at an initialization process of the additional device, a memory that stores the obtained characteristic information, a communication unit that transmits and receives data to and from the access apparatus, and a communication controller that transmits the characteristic information stored in the memory to the access apparatus, when receiving a request for the initialization process from the access apparatus through the communication unit after transferring an exclusive right to the access apparatus, the exclusive right being a right to exclusively control the additional device.

An access apparatus according to the present disclosure can communicate with a functional device that controls an additional device. The access apparatus includes a communication unit that transmits and receives data to and from the functional device, a communication controller that controls the communication unit to establish communication with the functional device and obtains an exclusive right from the functional device, the exclusive right being a right to exclusively control the additional device, and an access controller that obtains characteristic information of the additional device from the functional device by transmitting a request for an initialization process to the functional device after the communication controller obtains the exclusive right.

An access system according to the present disclosure includes a functional device that controls an additional device, and an access apparatus. The access apparatus includes a first communication unit that transmits and receives data to and from the functional device, a first communication controller that controls the first communication unit to establish communication with the functional device and obtains an exclusive right from the functional device, the exclusive right being a right to exclusively control the additional device, and a first access controller that obtains characteristic information of the additional device from the functional device by transmitting a request for an initialization process to the functional device after the first communication controller obtains the exclusive right. The functional device includes a second access controller that controls the additional device and obtains characteristic information of the additional device at the initialization process of the additional device, a memory that stores the obtained characteristic information, a second communication unit that transmits and receives data to and from the access apparatus, and a second communication controller that transmits the characteristic information stored in the memory to the access apparatus, when receiving a request for the initialization process from the access apparatus through the second communication unit after transferring the exclusive right to the access apparatus, the exclusive right being a right to exclusively control the additional device.

A communication establishing method according to the present disclosure is a method in which a functional device capable of communicating with an access apparatus establishes communication between the access apparatus and the functional device. The communication establishing method includes controlling an additional device to obtain characteristic information of the additional device at an initialization process of the additional device, storing the obtained characteristic information, transmitting and receiving data to and from the access apparatus, and transmitting the characteristic information stored in the memory to the access apparatus, when receiving a request for the initialization process from the access apparatus through the communication unit after transferring an exclusive right to the access apparatus.

### Effects of the Invention

According to the idea of the present disclosure, when an access apparatus accesses a functional device such as external storage through a communication such as a wireless communication, the frequency of an initialization process or the like for a function provided to the functional device which are performed by the access apparatus can be reduced.

### BRIEF DESCRIPTION OF DRAWINGS

FIG. 1 is a diagram showing a configuration of an access system according to a first embodiment.
FIG. 2 is a state transition diagram of the access system according to the first embodiment.
FIG. 3 is a diagram showing one example of memory characteristic information according to the first embodiment.
FIG. 4 is a sequence diagram showing processing procedures of a local memory initialization process according to the first embodiment.
FIG. 5 is a sequence diagram indicating procedures of a wireless connection process, a memory access right obtaining process, and a remote memory initialization process according to the first embodiment.
FIG. 6 is a sequence diagram indicating procedures of a memory access process according to the first embodiment.
FIG. 7 is a sequence diagram indicating procedures of a memory characteristic information reference process according to the first embodiment.
FIG. 8 is a sequence diagram indicating procedures of another remote memory initialization process according to the first embodiment.
FIG. 9 is a sequence diagram indicating procedures of a memory characteristic information reference process according to a second embodiment.

### Mode for Carrying out the Invention

### 1. First Embodiment

Embodiments will be described below in detail with reference to drawings as necessary.

In the description of the present disclosure, certain unnecessary portions regarding, for example, conventional technology, redundant description on substantially the same configuration may be omitted for ease of description.

The following description and the attached drawings are disclosed to enable those skilled in the art to sufficiently understand the present disclosure, and are not intended to limit the subject matter of the claims.

### 1-1. Configuration of Access System

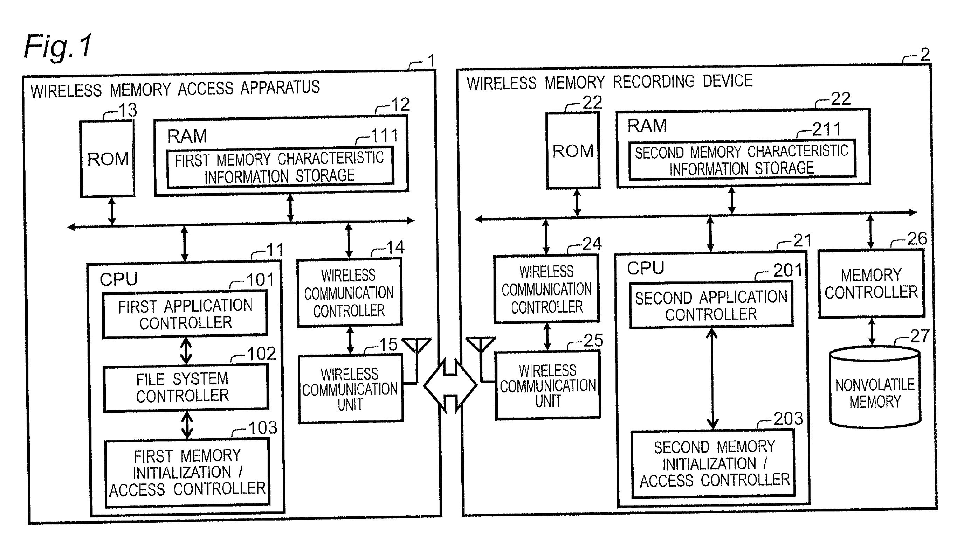

Fig. 1 is a diagram showing a configuration of an access system according to a first embodiment of the present invention. The access system includes a wireless memory access apparatus 1 which is an example of an access apparatus; and a wireless memory recording device 2 which is an example of a functional device. The wireless memory recording device 2 includes a nonvolatile memory 27 as an additional device. The additional device is a device that provides the functional device with a predetermined function.

As shown in Fig. 1, the wireless memory access apparatus 1 includes a CPU 11, a RAM 12, a ROM 13, a wireless communication controller 14, and a wireless communication unit 15.

The wireless communication controller 14 is a control unit that controls the wireless communication unit 15 to perform communication with the external wireless memory recording device 2. The types of wireless communications include, for example, 802.11a/b/g/n, Bluetooth, and the like. However, in the present embodiment, the type of wireless communication does not need to be limited to any specific wireless communication, and the idea of the present disclosure can be applied to any wireless communication. In addition, although in the present embodiment wireless communication is described as an example, the communication mode is not limited thereto. The wireless memory access apparatus 1 and the wireless memory recording device 2 may be connected to each other by wire or the like. That is, any implementation method can be used for a connection between the wireless memory access apparatus 1 and the wireless memory recording device 2, as long as the wireless memory access apparatus 1 and the wireless memory recording device 2 are connected in communication to each other.

The ROM 13 stores therein programs that control the wireless memory access apparatus 1. The CPU 11 executes the programs stored in the ROM 13 using the RAM 12 as a temporary storage area, thereby implementing respective functions of the first application controller 101, the file system controller 102, and the first memory initialization/access controller 103.

The first application controller 101 performs overall control of the wireless memory access apparatus 1, such as generation of data, power control, and instructions for wireless connection/disconnection.

The file system controller 102 performs control for managing data as files by a file system such as the FAT file system. In the present embodiment, the file system controller 102 manages data in the nonvolatile memory 27 present in the wireless memory recording device 2. Note, however, that the file system controller 102 may be configured to also manage data in any nonvolatile memory or memory card in the wireless memory access apparatus 1 which is not shown. Namely, the file system controller 102 can manage storage (storage apparatuses), such as storage in the wireless memory access apparatus 1 and storage in the wireless memory recording device 2, in a common manner without being aware of differences, e.g., to which apparatus the storage is directly connected.

The first memory initialization/access controller 103 performs a process corresponding to a process that is performed by a memory card driver to issue various types of commands, such as read/write, to a memory card in a conventional host apparatus.

The RAM 12 further includes a first memory characteristic information storage 111. The first memory characteristic information storage 111 stores information about the characteristics of the memory (hereinafter, referred to as "memory characteristic information") such as the register values obtained from the nonvolatile memory 27 in the wireless memory recording device 2. Specific stored information, storage procedure, and reference procedure will be described later.

On the other hand, as shown in Fig. 1, the wireless memory recording device 2 includes a CPU 21, a RAM 22, a ROM 23, a wireless communication controller 24, a wireless communication unit 25, a memory controller 26, and the nonvolatile memory 27. The wireless memory recording device 2 is different from the configuration of the wireless memory access apparatus 1 in that the nonvolatile memory 27 composed of a flash memory or the like and the memory controller 26 that controls the nonvolatile memory 27 are included, and that the configurations of processing units included in the CPU 21 are different.

The wireless memory recording device 2 according to the present embodiment includes, as described previously, the nonvolatile memory 27 as an example of an additional device. The additional device is not limited to the nonvolatile memory 27 and may be an apparatus or module other than a nonvolatile memory (e.g., an apparatus having tuner function or an apparatus having communication function such as Bluetooth). The nonvolatile memory 27 may be composed of a built-in memory such as a flash memory, eMMC (embedded MMC), or eSD (embedded SD), or may be composed of a removable memory such as an SD card. Note that although in the present embodiment a configuration using an SD card is described as an example of the nonvolatile memory, the idea of the present disclosure is not limited thereto.

In the following, the case of accessing from the wireless memory access apparatus 1 to the nonvolatile memory 27 in the wireless memory recording device 2 will be assumed.

The ROM 23 stores therein programs for controlling the wireless memory recording device 2.

The CPU 21 includes a second application controller 201 and a second memory initialization/access controller 203. The CPU 21 executes the programs stored in the ROM 23, thereby implementing respective functions of the second application controller 201 and the second memory initialization/access controller 203.

The second application controller 201 performs overall control of the wireless memory recording device 2, such as power control and instructions for wireless connection/disconnection.

The second memory initialization/access controller 203 performs a process corresponding to a process that is performed by a memory card driver to issue various types of commands, such as read/write, to a memory card in a conventional host apparatus.

The RAM 22 further includes a second memory characteristic information storage 211. The second memory characteristic information storage 211 stores information about the characteristics of the memory such as the register values of the nonvolatile memory 27 in the wireless memory recording device 2. Specific stored information, storage procedure, and reference procedure will be described later.

In the present embodiment, by the configuration of Fig. 1, a wireless connection between the wireless memory access apparatus 1 and the wireless memory recording device 2 is established, and the wireless memory access apparatus 1 accesses the nonvolatile memory 27 in the wireless memory recording device 2 through wireless communication. At that time, by using the first memory characteristic information storage 111 and the second memory characteristic information storage 211, a reduction in the frequency of an initialization process of the nonvolatile memory 27 and an increase in the speed of a connection process are achieved.

### 1-2. Transition of State of Wireless Memory Control System

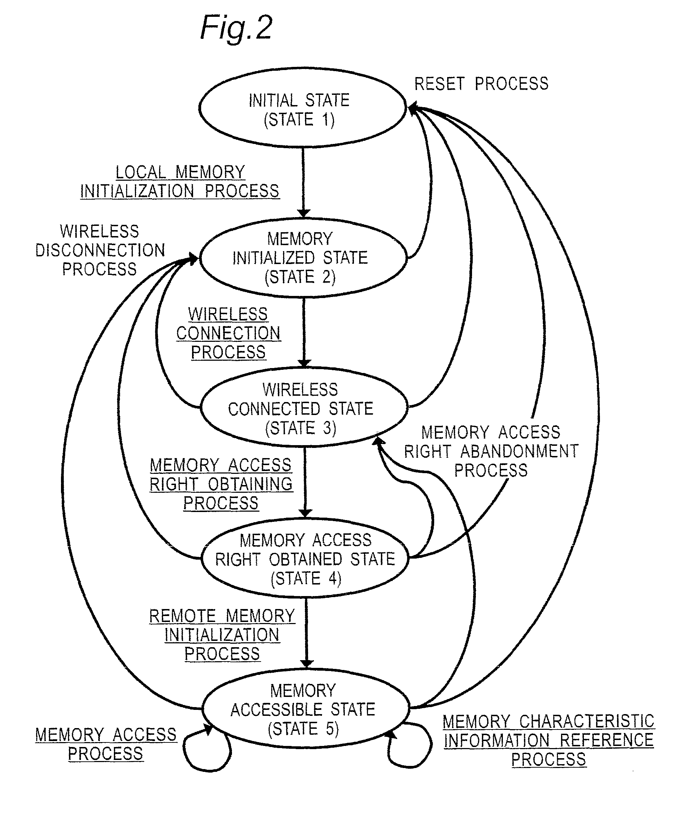

Fig. 2 is a diagram showing the transition of the state of a wireless memory control system (access system) composed of the wireless memory access apparatus 1 and the wireless memory recording device 2 in the present embodiment. The wireless memory control system has five states, "initial state" (State 1), "memory initialized state" (State 2), "wireless connected state" (State 3), "memory access right obtained state" (State 4), and "memory accessible state" (State 5), and transitions between the states.

(Initial state) The wireless memory control system according to the present embodiment goes to the "initial state" (State 1) immediately after the power to the wireless memory recording device 2 is turned on. This state is a state in which an initialization process of the nonvolatile memory 27 has not been performed and thus the nonvolatile memory 27 cannot be accessed, and is a state in which a wireless connection between the wireless memory access apparatus 1 and the wireless memory recording device 2 has not been established.

(Memory initialized state) When a "local memory initialization process" is performed in the wireless memory recording device 2 in the initial state (State 1), the wireless memory control system transitions its state to the "memory initialized state" (State 2). This state (State 2) is a state in which the initialization process of the nonvolatile memory 27 in the wireless memory recording device 2 has been completed and thus the nonvolatile memory 27 can be accessed, but is a state in which a wireless connection between the wireless memory access apparatus 1 and the wireless memory recording device 2 has not been yet established. Note that the "local memory initialization process" is the process of initializing the nonvolatile memory 27. Details of the "local memory initialization process" will be described later.

(Wireless connected state) Furthermore, when a "wireless connection process" is performed between the wireless memory access apparatus 1 and the wireless memory recording device 2 in the memory initialized state (State 2), the wireless memory control system transitions its state to the "wireless connected state" (State 3). This state (State 3) is a state in which a wireless connection between the wireless memory access apparatus 1 and the wireless memory recording device 2 has been established, in addition to the state of the "memory initialized state" (State 2). However, this is a state in which the access right to the nonvolatile memory 27 in the wireless memory recording device 2 (hereinafter, referred to as the "memory access right") is stored on the side of the wireless memory recording device 2, and thus, the wireless memory access apparatus 1 cannot access the nonvolatile memory 27. Here, the memory access right is an exclusive right that allows to exclusively control the nonvolatile memory 27 in the wireless memory recording apparatus 2. Note that the "wireless connection process" is a process related to a connection between the wireless memory access apparatus 1 and the wireless memory recording device 2 through a wireless line. Details of the "wireless connection process" will be described later.

(Memory access right obtained state) Subsequently, when a "memory access right obtaining process" is performed in the "wireless connected state" (State 3), the wireless memory control system transitions its state to the "memory access right obtained state" (State 4). This state (State 4) is a state in which the access right to the nonvolatile memory 27 in the wireless memory recording apparatus 2 has been transferred to the side of the wireless memory access apparatus 1, in addition to the state of the "wireless connected state" (State 3). However, in the "memory access right obtained state" (State 4), the wireless memory access apparatus 1 can simply view the nonvolatile memory 27 in the wireless memory recording apparatus 2 in the same state as that of local storage therein. This is a state in which an initialization process for making the nonvolatile memory 27 to be storage has not been performed yet.

(Memory accessible state) Subsequently, when a "remote memory initialization process" is performed in this state (State 4), the wireless memory control system transitions its state to the "memory accessible state" (State 5). Only after the wireless memory control system goes into this state, the wireless memory access apparatus 1 is allowed to access the nonvolatile memory 27 in the wireless memory recording apparatus 2 ("memory access process"). In addition, in this state, the wireless memory access apparatus 1 can perform a "memory characteristic information reference process" on the wireless memory recording apparatus 2. Here, the "memory characteristic information reference process" is a process for obtaining, by the wireless memory access apparatus 1, memory characteristic information from the wireless memory recording apparatus 2. Details of the memory characteristic information and details of the memory characteristic information reference process will be described later.

In addition, in the "memory access right obtained state" (State 4) or the "memory accessible state" (State 5), when the wireless memory access apparatus 1 does not need to have the access right to the nonvolatile memory 27and thus the wireless memory access apparatus 1 abandons the access right ("memory access right abandonment process"), the wireless memory control system transitions its state to the "wireless connected state" (State 3).

Furthermore, when the wireless communication is disconnected ("wireless disconnection process") in the state of the "wireless connected state" (State 3), the "memory access right obtained state" (State 4), or the "memory accessible state" (State 5), the wireless memory control system transitions to the state of the "memory initialized state" (State 2).

Furthermore, in the state of the "memory initialized state" (State 2), the "wireless connected state" (State 3), the "memory access right obtained state" (State 4), or the "memory accessible state" (State 5), when the nonvolatile memory 27 is reset or the nonvolatile memory 27 is removed and inserted in the case of the nonvolatile memory 27 being a removable memory ("reset process"), the wireless memory control system transitions to the "initial state" (State 1).

### 1-3. Memory characteristic information

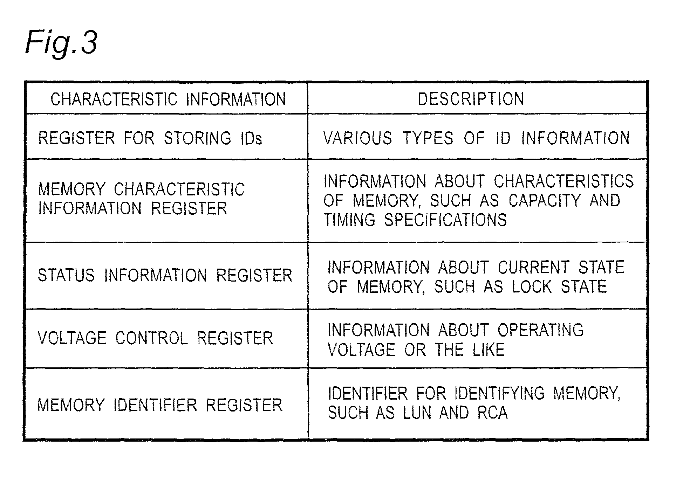

Next, memory characteristic information stored in the first memory characteristic information storage 111 and the second memory characteristic information storage 211 according to the present embodiment will be described. Fig. 3 is a diagram showing an example of memory characteristic information according to the first embodiment.

The memory characteristic information is information indicating various characteristics of the nonvolatile memory 27 or the like. In the case of the nonvolatile memory 27 being an SD card, the memory characteristic information corresponds to various types of registers of the SD card. In the example of Fig. 3, the memory characteristic information includes information such as "register for storing IDs", "memory characteristic information register", "status information register", "voltage control register", and "memory identifier register".

Note that in the present embodiment the wireless memory recording apparatus 2 including a nonvolatile memory such as an SD card will be described as an example of the functional device. However, the application of the idea of the present disclosure is not limited to such a functional device. When a device included in the functional device has other functions (tuner function, communication function, and so on) than a memory, the characteristic information of the device may include any of information on registers provided for each function, such as a register for controlling the function (e.g., input, output, or the like), a register for grasping the state of the function, a register for determining an error type, or a register for controlling interrupt processing.

The "register for storing IDs" is a register storing various types of ID information including a vendor ID, a serial number, and so on. In the case where the nonvolatile memory 27 is an SD card, the "register for storing IDs" corresponds to the CID register.

The "memory characteristic information register" is a register storing information about the general characteristics of the nonvolatile memory 27, such as capacity and timing specifications. In the case where the nonvolatile memory 27 is an SD card, the "memory characteristic information register" corresponds to the CSD register and the SD Status.

The "status information register" is information about the current state of the nonvolatile memory 27, such as lock state. In the case of an SD card, the "status information register" corresponds to the R1 response. The R1 response itself is not a register, but is information that can be directly obtained from the SD card in response after issuing a command to the SD card. Thus, in the present embodiment, the "status information register" is treated as a kind of register. Namely, in the present embodiment, the "register" is such information that is directly obtained from the nonvolatile memory 27.

In addition, the "voltage control register" is information about operating voltage. In the case of an SD card, the "voltage control register" corresponds to the OCR register.

The "memory identifier register" is information identifying the nonvolatile memory 27. In the case of an SD card, the "memory identifier register" corresponds to the RCA. The RCA itself is not originally a register, either, but is treated as a kind of register in the present embodiment based on the above-described definition. The RCA changes every time an initialization process of the nonvolatile memory 27 is performed.

Most of the memory characteristic information is obtained from the nonvolatile memory 27 as part of an initialization process of the nonvolatile memory 27. Normally, the memory characteristic information is transmitted to the access apparatus side, in response to the issue of various types of commands and read data in a memory initialization process. The present embodiment proposes a method of reducing a memory initialization process by devising the obtaining timing, method of use, or the like, of the memory characteristic information. Hence, in the following description of the present embodiment, the obtaining timing, method of use, or the like, of the memory characteristic information will be described in detail using various sequence diagrams.

The present embodiment characterized by each of the processes from the initialization of the nonvolatile memory 27 to actual access to the nonvolatile memory 27 by the wireless memory access apparatus 1. Thus, in the following, the process from the initialization of the nonvolatile memory 27 to actual access to the nonvolatile memory 27 by the wireless memory access apparatus 1 is divided into processes, a "local memory initialization process", a "wireless connection process", a "memory access right obtaining process", a "remote memory initialization process", a "memory access process", and a "memory characteristic information reference process", and the respective processes will be described in detail using various sequence diagrams.

### 1-4. Local Memory initialization process

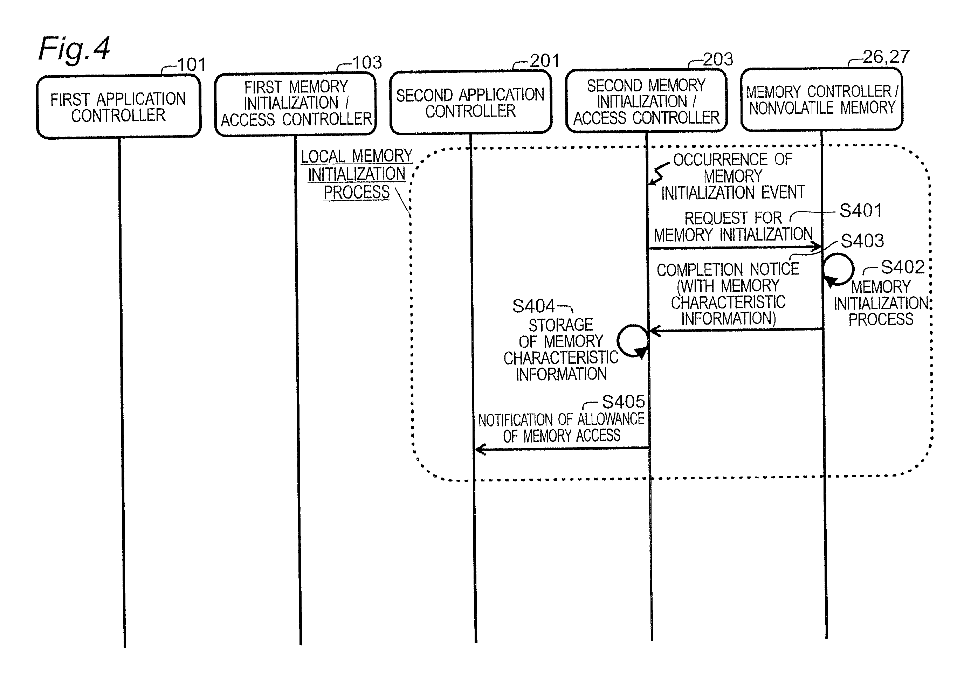

Fig. 4 is a sequence diagram showing the processing procedure of a "local memory initialization process" according to the present embodiment. The "local memory initialization process" includes processes up to the point where an initialization process of the nonvolatile memory 27 is performed in the wireless memory recording device 2, thereby going to a state in which the second application controller 201 in the wireless memory recording device 2 is allowed to access the nonvolatile memory 27. A specific processing procedure is as follows.

(S401) At timing at which, for example, the power to the wireless memory recording device 2 is turned on the nonvolatile memory 27 is placed, or the like, a memory initialization event occurs for the second memory initialization/access controller 203. By the occurrence of the memory initialization event, the second memory initialization/access controller 203 requests the memory controller 26 to initialize the nonvolatile memory 27. That is, the second memory initialization/access controller 203 requests the memory controller 26 to initialize the nonvolatile memory 27, independently of an initialization request from the wireless memory access apparatus 1.

(S402) The memory controller 26 performs an initialization process on the nonvolatile memory 27 (memory initialization process). In the case of the nonvolatile memory 27 being an SD card, specifically, the memory controller 26 issues initialization commands such as CMD0, ACMD41, CMD2, and CMD3 in practice to perform an initialization process toward the nonvolatile memory 27.

(S403) When the memory initialization process has been completed, the memory controller 26 notifies the second memory initialization/access controller 203 of the completion of the initialization process. At this time, the memory controller 26 transmits memory characteristic information described in Fig. 3 to the second memory initialization/access controller 203. In the case of the nonvolatile memory 27 being an SD card, specifically, CID register, CSD register, SD Status, R1 response, OCR register, RCA, and so on are transmitted to the second memory initialization/access controller 203. Since these pieces of information are information to be obtained from the SD card upon initialization of the SD card, these pieces of information are obtained from the SD card at the time of this memory initialization process and are transmitted to the second memory/access controller 203.

(S404) The second memory initialization/access controller 203 stores the transmitted memory characteristic information in the second memory characteristic information storage 211.

(S405) Finally, the second memory initialization/access controller 203 notifies the second application controller 201 of the completion of preparation for access to the nonvolatile memory 27. The notification of the completion of preparation for access is also a notification allowing to access the nonvolatile memory 27. By this, the second application controller is thereafter allowed to access the nonvolatile memory 27.

### 1-5. Wireless Connection Process, Memory Access Right Obtaining Process, and Remote Memory Initialization Process

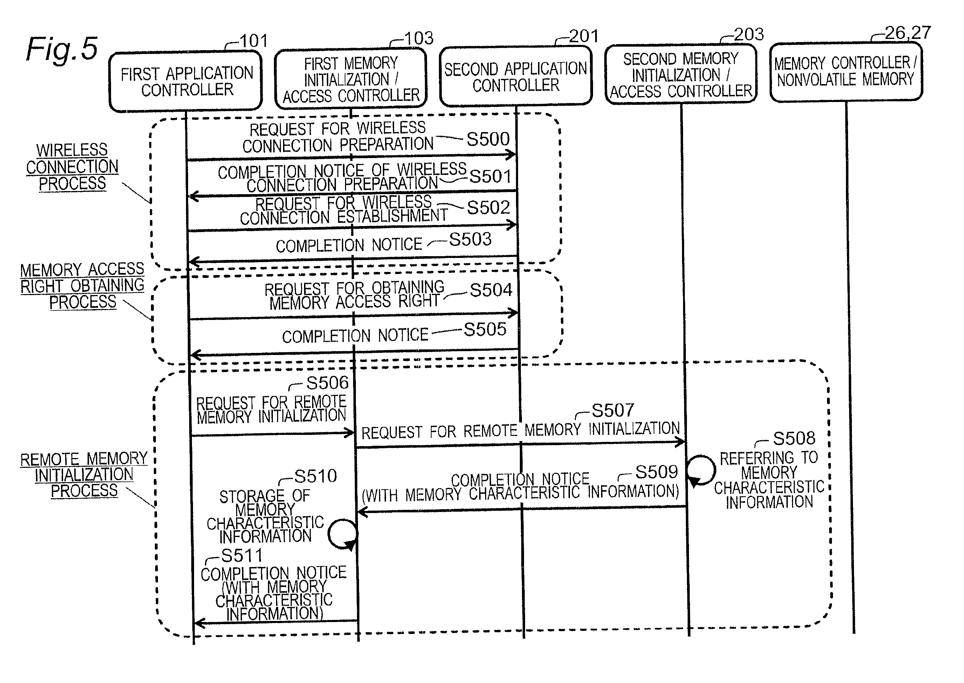

Next, the processing procedures of a "wireless connection process", a "memory access right obtaining process", and a "Remote Memory Initialization Process" according to the first embodiment of the present invention will be described using Fig. 5.

The "wireless connection process" includes a process for establishing a wireless connection between the wireless memory access apparatus 1 and the wireless memory recording device 2. In addition, the "memory access right obtaining process" is the process of obtaining, by the wireless memory access apparatus 1, the access right to the nonvolatile memory 27 from the wireless memory recording device 2. By transferring the access right, competition of access to the nonvolatile memory 27 is avoided, and thus preventing data corruption on the nonvolatile memory 27 caused by access competition. Further, the "remote memory initialization process" includes the process of the wireless memory access apparatus 1 requesting the wireless memory recording apparatus 2 to perform memory initialization of the nonvolatile memory 27. Specific processing procedures of the respective processes are as follows.

(S500) The first application controller 101 in the wireless memory access apparatus 1 transmits a request for wireless connection preparation to the second application controller 201 in the wireless memory recording device 2. When the wireless memory recording device 2 is not activated, the wireless memory recording device 2 does not respond to the request for the wireless connection preparation.

(S501) When receiving the request for the wireless connection preparation from the first application controller 101 in the wireless memory access apparatus 1 after completion of the "local memory initialization process", the second application controller 201 in the wireless memory recording device 2 notifies the first application controller 101 in the wireless memory access apparatus 1 that wireless connection preparation has been made. By this, the wireless memory access apparatus 1 recognizes that the wireless memory access apparatus 1 can start a request to establish a wireless connection with the wireless memory recording device 2. Note, however, that this notification process is not necessarily required, and the process of notifying that wireless connection preparation has been made may be omitted when, for example, the wireless memory access apparatus 1 checks on the wireless memory recording device 2 by polling whether a request to establish a wireless connection can be made.

(S502) When the first application controller 101 in the wireless memory access apparatus 1 is notified from the second application controller 201 that the wireless connection preparation has been made, the first application controller 101 transmits a request for establishing a wireless connection between the wireless memory access apparatus 1 and the wireless memory recording device 2 (hereinafter, referred to as a "request for wireless connection establishment") to the second application controller 201 in the wireless memory recording device 2.

(S503) When the second application controller 201 in the wireless memory recording device 2 receives the request for wireless connection establishment from the first application controller 101 in the wireless memory access apparatus 1, the second application controller 201 notifies the first application controller 101 in the wireless memory access apparatus 1 of the completion of establishment of a wireless connection, by which the wireless connection process ends.

The processes up to this point are the "wireless connection process". By this process, the wireless memory control system transitions its state from the "memory initialized state" (State 2) to the "wireless connected state" (State 3) shown in Fig. 2.

Next, the processing procedure of a "memory access right obtaining process" will be described.

(S504) After the completion of the wireless connection process, the first application controller 101 in the wireless memory access apparatus 1 requests for a memory access right from the second application controller 201 in the wireless memory recording device 2.

(S508) When the second application control 201 in the wireless memory recording device 2 is requested for the memory access right from the first application controller 101 in the wireless memory access apparatus 1, the second application controller 201 performs a process required to pass the access right to the nonvolatile memory 27 which is stored thereby, to the wireless memory access apparatus 1. Thereafter, the second application control 201 notifies the first application controller 101 in the wireless memory access apparatus 1 of the completion of the process for the access right request.

Here, the "process required" is, for example, a process in which an unmount process of the nonvolatile memory 27 is instructed to a file system controller which is not shown in the wireless memory recording device 2, to set the wireless memory recording device 2 to a state in which all applications in the wireless memory recording device 2 are not allowed to perform reading or writing to the nonvolatile memory 27. Namely, in order to pass the access right to the nonvolatile memory 27 from the wireless memory recording device 2 to the wireless memory access apparatus 1, the wireless memory recording device 2 performs the process of shutting down access to the nonvolatile memory 27 from within the wireless memory recording device 2.

The processes up to this point (S504 to S505) are the "memory access right obtaining process". By this, even if the wireless memory access apparatus 1 performs, for example, data writing to the wireless memory recording apparatus 2, data consistency can be maintained between the wireless memory access apparatus 1 and the wireless memory recording apparatus 2.

Next, the processing procedure of a "remote memory initialization process" will be described.

(S506) After the completion of the memory access right obtaining process, the first application controller 101 requests the first memory initialization/access controller 103 to initialize a "remote memory". Herein, the "remote memory" refers to the nonvolatile memory 27 present in the wireless memory recording apparatus 2. The first application controller 101 views the local storage present in the wireless memory access apparatus 1 and the remote memory present external to the wireless memory access apparatus 1 in the same manner as just storage. Hence, before the first application controller 101 actually starts accessing the remote memory, the first application controller 101 requests a memory initialization process in such a manner.

(S507) When the first memory initialization/access controller 103 in the wireless memory access apparatus 1 is requested by the first application controller 101 for a memory initialization process, the first memory initialization/access controller 103 requests the second memory initialization/access controller 203 in the wireless memory recording apparatus 2 to initialize the remote memory. This request is transmitted from the wireless memory access apparatus 1 to the wireless memory recording apparatus 2 through wireless communication.

(S508) When the second memory initialization/access controller 203 is requested by the first memory initialization/access controller 103 to initialize the remote memory, the second memory initialization/access controller 203 refers to the memory characteristic information held in the second memory characteristic information storage 211 in the RAM 22, instead of issuing a memory initialization request to the memory controller 26.

(S509) The second memory initialization/access controller 203 in the wireless memory recording apparatus 2 notifies the first memory initialization/access controller 103 in the wireless memory access apparatus 1 of the completion of the remote memory initialization, and also transmits the referred memory characteristic information to the first memory initialization/access controller 103.

(S510) The first memory initialization/access controller 201 stores the memory characteristic information received from the second memory initialization/access controller 203, in the first memory characteristic information storage 111.

(S511) Finally, when the first memory initialization/access controller 103 stores the memory characteristic information, the first memory initialization/access controller 103 notifies the first application controller 101 of the completion of the remote memory initialization process, by which the remote memory initialization process ends.

By the "remote memory initialization process", the wireless memory access apparatus 1 obtains from the wireless memory recording apparatus 2 memory characteristic information that is conventionally obtained from the nonvolatile memory 27 in a memory initialization process, and stores and holds the memory characteristic information in the first memory characteristic information storage 111 in the RAM 12. By this, the wireless memory access apparatus 1 can implement the same process as a conventional memory initialization process, for the wireless memory recording apparatus 2 that is not directly connected thereto and is controlled only through communication. In addition, since a memory initialization process itself of the nonvolatile memory 27 is not performed in practice, a connection process can be performed rapidly.

### 1-6. Memory access process

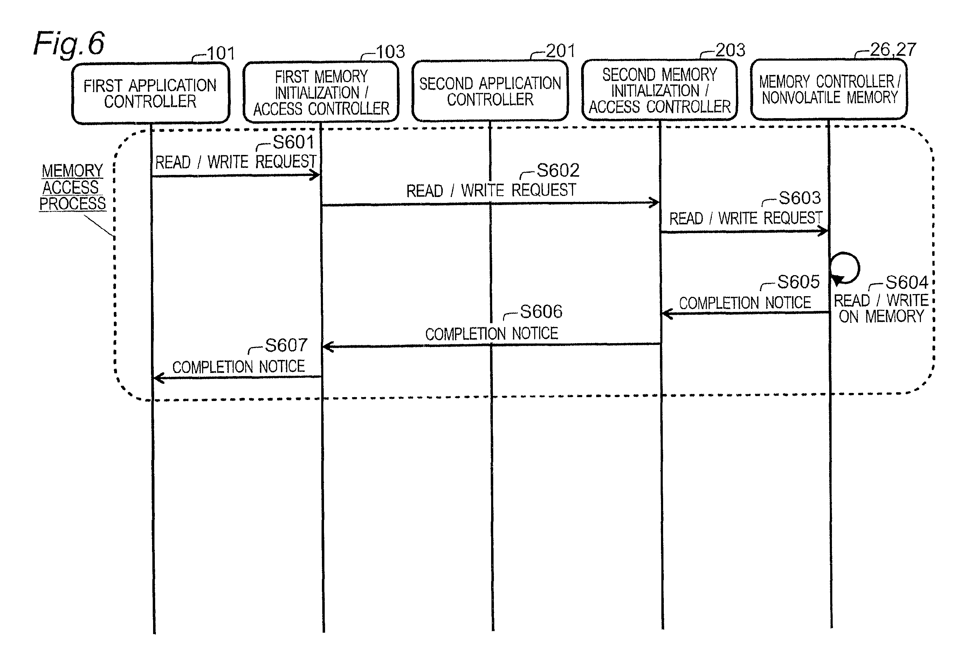

Next, the processing procedure of a "memory access process" in the present embodiment will be described using Fig. 6.

(S601) The first application controller 101 requests, via the file system controller 102, the first memory initialization/access controller 103 to perform a read/write process on the nonvolatile memory 27.

(S602) The first memory initialization/access controller 103 in the wireless memory access apparatus 1 requests the second memory initialization/access controller 203 in the wireless memory recording device 2 to perform the read/write process on the nonvolatile memory 27.

(S603) When the second memory initialization/access controller 203 is requested by the first memory initialization/access controller 103 for the read/write process, the second memory initialization/access controller 203 requests the memory controller 26 to perform the read/write process on the nonvolatile memory 27.

(S604) When the memory controller 26 is requested by the second memory initialization/access controller 203 for a read/write process, the memory controller 26 performs the read/write process on the nonvolatile memory 27 in practice.

(S605) When the memory controller 26 has completed the read/write process on the nonvolatile memory 27, the memory controller 26 notifies the second memory initialization/access controller 203 of the completion of the process.

(S606) When the second memory initialization/access controller 203 in the wireless memory recording device 2 is notified from the memory controller 26 about the completion of the process, the second memory initialization/access controller 203 notifies the first memory initialization/access controller 103 in the wireless memory access apparatus 1 of the completion of the process.

(S607) When the first memory initialization/access controller 103 is notified from the second memory initialization/access controller 203 about the completion of the process, the first memory initialization/access controller 103 notifies the first application controller 101 of the completion of the process.

The "memory access process" is substantially the same process as a conventional process in which an arbitrary application issues a read/write request to a card driver via a file system to perform a read/write process. Namely, after performing the "wireless connection process", the "memory access right obtaining process", and the "remote memory initialization process" in the present embodiment, memory access can be implemented by a common process to a conventional memory access process.

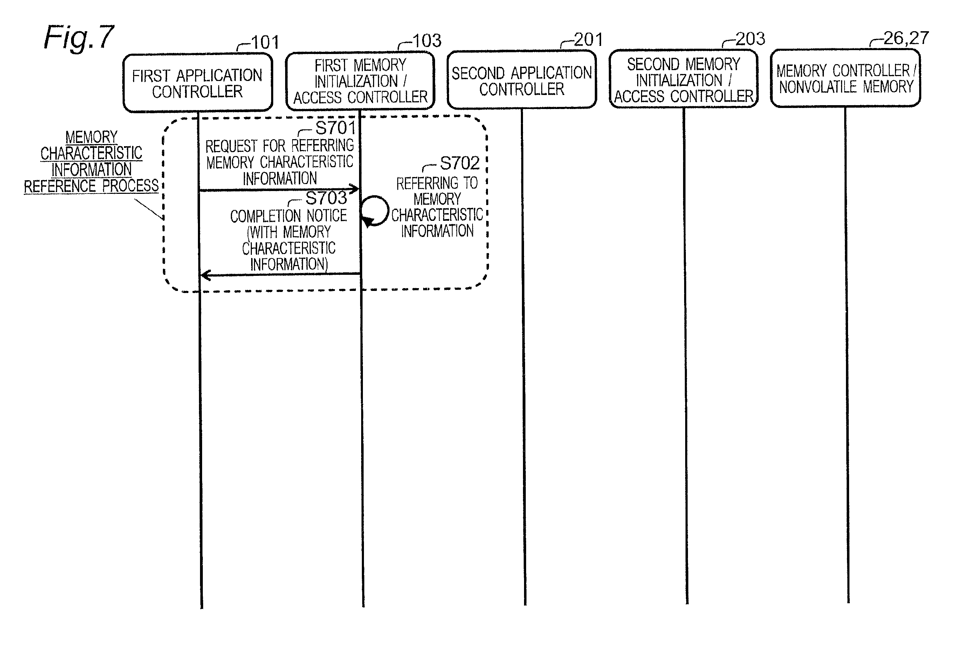

Next, the processing procedure of a "memory characteristic information reference process" in the present embodiment will be described using Fig. 7.

The memory characteristic information reference process corresponds to a conventional process of an application inquiring a driver about memory characteristic information such as capacity. In the present embodiment, the memory characteristic information reference process is implemented by the first application controller 101 inquiring the first memory initialization/access controller 103. A specific processing procedure is as follows.

(S701) The first application controller 101 requests, via the file system controller 102 (as necessary), the first memory initialization/access controller 103 to refer to memory characteristic information.

(S702) When the first memory initialization/access controller 103 is requested by the first application controller 101 to refer to memory characteristic information, the first memory initialization/access controller 103 refers to the memory characteristic information stored in the first memory characteristic information storage 111 in the RAM 12. Note that the memory characteristic information is stored in the first memory characteristic information storage 111 in the aforementioned remote memory initialization process (S510 in Fig. 5).

(S703) When the first memory initialization/access controller 103 completes the reference to the memory characteristic information, the first memory initialization/access controller 103 notifies the first application controller 101 of the completion of the memory characteristic information reference process, and transmits the referred memory characteristic information (S702) to the first application controller 101. By this, the memory characteristic information reference process ends.

As described above, the "memory characteristic information reference process" in the present embodiment is implemented by referring to the memory characteristic information stored in the first memory characteristic information storage 111 in the RAM 12. At this time, the wireless memory access apparatus 1 does not access the nonvolatile memory 27 in the wireless memory recording apparatus 2 in practice. By this, the memory characteristic information can be referred to rapidly.

By using the wireless memory recording device 2 and the wireless memory access apparatus 1 according to the present embodiment which are configured as described above in combination, when accessing a nonvolatile memory 27 through wireless communication, it can be unnecessary to perform an initialization process of the nonvolatile memory 27 every time a connection process is performed. Thus, a connection process can be performed rapidly. The art described in the present embodiment provides a great effect particularly when applied to the case in which a reconnection process frequently occurs in an environment where a wireless connection is unstable.

Note that the configurations of the wireless memory recording device 2 and the wireless memory access apparatus 1 described in the above-described embodiments are an example, and thus may be modified without departing from the spirit and scope of the first embodiment of the present invention. For example, although Fig. 1 show an example in which a CPU, a RAM, a ROM, and so on are configured by individual independent blocks, some or all of the CPU, the RAM, the ROM, and so on may be integrated into one chip as an LSI. One-chip integration may be implemented using any of various types of LSI called different names, such as an IC, a system LSI, a super LSI, and an ultra LSI, depending on the difference in integration density.

Furthermore, a means for implementing an integrated circuit for the CPU, the RAM, the ROM, and so on is not limited to implementation by an LSI, and may be implemented by a dedicated circuit or a general-purpose processor. It is also possible to use an FPGA (Field Programmable Gate Array) which can be programmed after manufacturing an LSI, or a reconfigurable processor which can reconfigure the connections and settings of circuit cells in an LSI.

Moreover, if a technology for implementing an integrated circuit that replaces LSIs appears due to the advances or derivatives of semiconductor technology, integration of functional blocks (the CPU, the RAM, the ROM, and so on) may, of course, be implemented using that technology. Application of biotechnology or the like are possible cases.

In addition, each process of the present embodiment may be implemented by hardware or may be implemented by software (including OS (Operating System), middleware, or software implemented with a predetermined library). Furthermore, each process may be implemented by a combination of a process by software and a process by hardware.

Note that when the wireless memory access apparatus 1 and the wireless memory recording device 2 in the present embodiment are implemented by hardware, needless to say, there is a need to make a timing adjustment for performing each process. In the present embodiment, for convenience of description, details of a timing adjustment of various types of signals occurring in actual hardware design are omitted.

In addition, the nonvolatile memory 27 may be either a built-in memory or a removable memory. In the case of the nonvolatile memory 27 being a removable memory, in addition to an SD card, any card such as a Memory Stick, a MMC card, a CF (Compact Flash) (registered trademark), a PCI Express card, or an SSD may be used.

In addition, the memory characteristic information shown in Fig. 3 is an example, and thus, all information or only a part of the information shown in Fig. 3 may be used, or other information may be added. In the present embodiment, for example, information of Fig. 3 is described mainly assuming the case of the nonvolatile memory 27 being an SD card. However, other memory cards may store different types of registers. The idea of the present embodiment may also be applied to a wireless memory control system that transmits and receives memory characteristic information including registers relevant to the characteristics of each memory card.

Furthermore, in the case of the nonvolatile memory 27 being an SD card, the memory identifier register in Fig. 3 corresponds to RCA, as described previously. The RCA is address information which is notified from the SD card to a host device upon initialization of the SD card. The value of the RCA is different every time initialization is performed. Furthermore, since the RCA needs to be used as the arguments of some commands for the SD card, the wireless memory access apparatus 1 needs to obtain the value of the RCA from the wireless memory recording device 2 in a wireless connection process and a memory access right obtaining process. Thus, when there is information of which value changes at each initialization, such as RCA, if memory initialization is performed every time a wireless connection is established without applying the arts according to the present embodiment, then the value of the RCA needs to be notified to the wireless memory access apparatus 1 every time memory initialization is performed. Thus, in that case, the time required for a connection process increases. Hence, by applying the arts according to the present embodiment to such a case, the effect that the time required for a connection process can be reduced becomes greater.

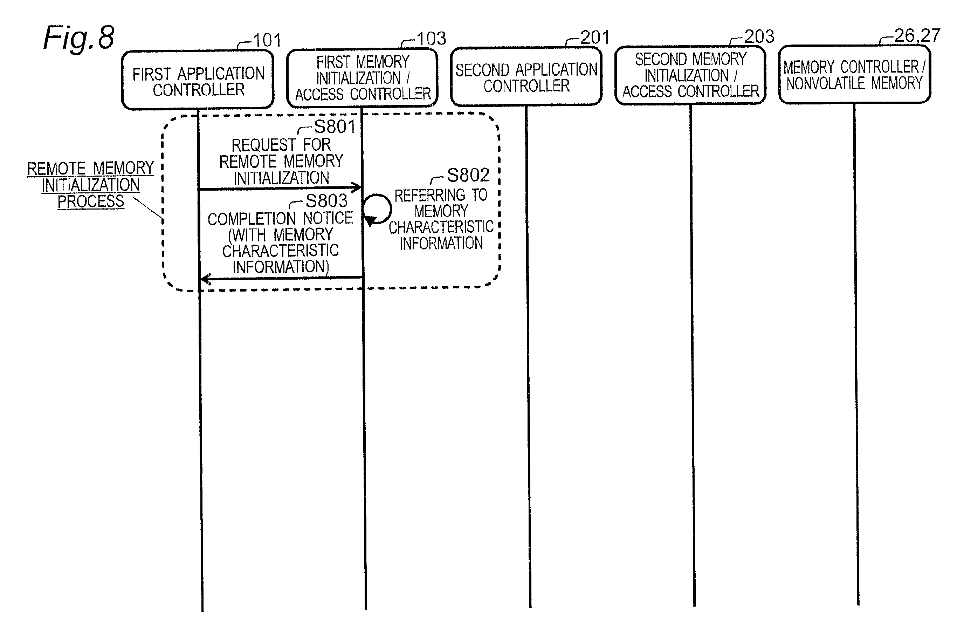

In addition, the processing procedure of a "remote memory initialization process" shown in Fig. 5 is an example of a "remote memory initialization process", and thus, as a "remote memory initialization process", another method may be adopted. Fig. 8 shows another example of a "remote memory initialization process".

To perform the "remote memory initialization process" shown in Fig. 8, before performing the "remote memory initialization process", the wireless memory access apparatus 1 obtains memory characteristic information from the wireless memory recording apparatus 2 at the time of either a "wireless connection process" or a "memory access right obtaining process". In this case, the wireless memory access apparatus 1 can store in advance the obtained memory characteristic information in the first memory characteristic information storage 111 in the RAM 12. By this, in the "remote memory initialization process" in Fig. 8, by the first memory initialization/access controller 103 referring to the first memory characteristic information storage 111, the processes at steps S507 to S510 in the "remote memory initialization process" shown in Fig. 5 can be omitted. By performing the "remote memory initialization process" shown in Fig. 8, it becomes unnecessary for the wireless memory access apparatus 1 to access the wireless memory recording apparatus 2 at the "remote memory initialization process", enabling to rapidly perform the remote memory initialization process.

Further, in the "remote memory initialization process" shown in Fig. 5, that an instruction to initialize the nonvolatile memory 27 is not issued to the memory controller 26 is described. However, there is a case in which when an error occurs at memory access, which includes reading and writing, from the wireless memory access apparatus 1 to the nonvolatile memory 27 in the wireless memory recording apparatus 2, the wireless memory access apparatus 1 needs to explicitly instruct the wireless memory recording apparatus 2 to reinitialize (reset) the nonvolatile memory 27 for error recovery. To handle such a case, in a request for remote memory initialization at step S506 in Fig. 5, whether to reset the nonvolatile memory 27 may be explicitly specified in the argument.

Specifically, when normal processes from a wireless connection process to a remote memory initialization process such as those described in Fig. 5 are performed, in a request for remote memory initialization at step S506, the argument is set so that the reset of the nonvolatile memory 27 is "not performed". Furthermore, at error recovery, the wireless memory access apparatus 1 issues a request for remote memory initialization where the argument is set so that the reset of the nonvolatile memory 27 is "performed", to the wireless memory recording apparatus 2. By this, an error recovery process using a request for remote memory initialization at step S506 can be implemented.

At this time, only a reset process may be performed on the nonvolatile memory 27, and memory characteristic information may not be reobtained from the nonvolatile memory 27. For example, in the case of the nonvolatile memory 27 being an SD card, the memory controller 26 may issue only commands regarding reset of the SD card, such as CMD0, ACMD41, CMD2, and CMD3, and the memory controller 26 may not issue commands regarding obtaining of memory characteristic information, such as CMD9 and ACMD13. By this, an unnecessary command issue to the nonvolatile memory 27 is prevented, enabling to rapidly perform an error recovery process. Likewise, in the error recovery process, memory characteristic information that is notified from the wireless memory recording apparatus 2 to the wireless memory access apparatus 1 at step S509 may not be notified.

Further, the request for the remote memory initialization of step S506 may not be combined with the error recovery process, and the request for the remote memory initialization and the error recovery process are separately provided as individual requests. By this, it is unnecessary to set an argument for the request for the remote memory initialization of step S506, and thus the implementation is simple in some cases.

### 1-7. Conclusion of the Present Embodiment

A wireless memory recording apparatus 2 according to the present embodiment can communicate with a wireless memory access apparatus 1. The wireless memory recording apparatus 2 includes an access controller that controls a nonvolatile memory 27 and obtains characteristic information of the nonvolatile memory 27 at an initialization process of the nonvolatile memory 27, a second memory characteristic information storage 211 that stores the obtained characteristic information, a communication unit that transmits and receives data to and from the wireless memory access apparatus 1, and a communication controller that transmits the characteristic information stored in the second memory characteristic information storage 211 to the wireless memory access apparatus 1, when receiving a request for the initialization process from the wireless memory access apparatus 1 through the communication unit after transferring an exclusive right to the wireless memory access apparatus 1, the exclusive right being a right to exclusively control the nonvolatile memory 27.

An wireless memory access apparatus 1 according to the present embodiment can communicate with a wireless memory recording apparatus 2 that controls a nonvolatile memory 27. The wireless memory access apparatus 1 includes a wireless communication unit 25 that transmits and receives data to and from the wireless memory recording apparatus 2, a first application controller 101 that controls the wireless communication unit 25 to establish communication with the wireless memory recording apparatus 2 and obtains an exclusive right from the wireless memory recording apparatus 2, the exclusive right being a right to exclusively control the nonvolatile memory 27, and an first memory initialization/access controller 103 that obtains characteristic information of the nonvolatile memory 27 from the wireless memory recording apparatus 2 by transmitting a request for an initialization process to the wireless memory recording apparatus 2 after the first application controller 101 obtains the exclusive right.

When establishing a communication with the wireless memory access apparatus 1, the wireless memory recording apparatus 2 including the above described configuration transmits memory characteristic information stored in the second memory characteristic information storage 211 to the wireless memory access apparatus 1, without initializing the nonvolatile memory 27. By this, when the wireless memory access apparatus 1 access the nonvolatile memory 27 in the wireless memory recording apparatus 2 through a communication line, the frequency of an initialization process of the nonvolatile memory 27 can be reduced. Therefore, the time required for establishing processes of the communication between the wireless memory access apparatus 1 and the wireless memory recording apparatus 2 can be reduced.

### 2. Second embodiment

A second embodiment according to the present disclosure will be described. The present embodiment is different from the first embodiment in the processing procedure of a "memory characteristic information reference process", and other configurations and operations are the same as those in the first embodiment. Hence, in the present embodiment, only the processing procedure of a "memory characteristic information reference process" will be described, and description of other processing procedures is omitted.

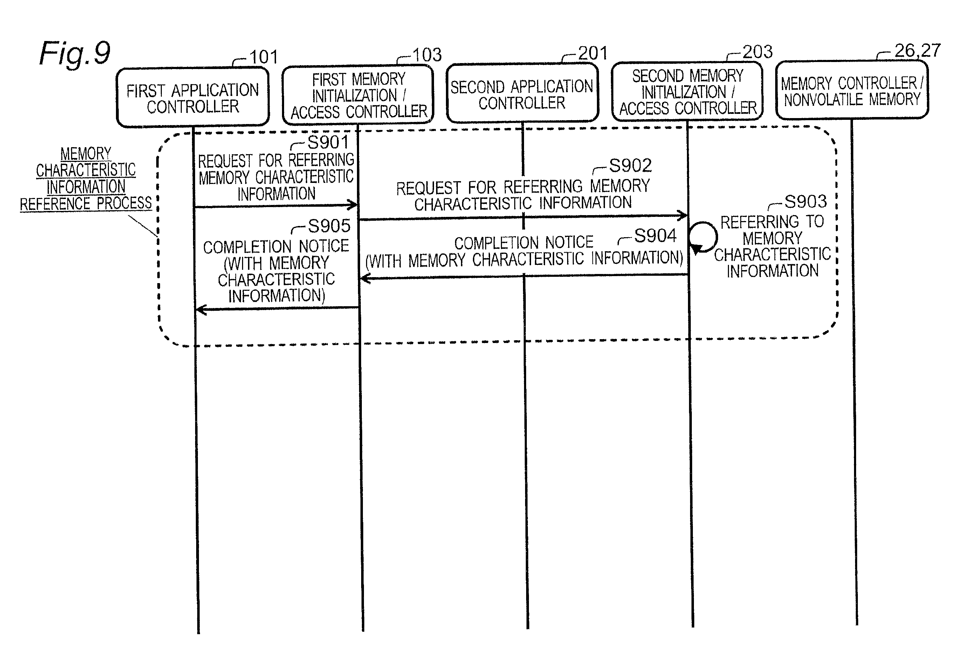

Fig. 9 is a sequence diagram showing the processing procedure of a "memory characteristic information reference process" in the present embodiment. In the present embodiment, the timing of memory characteristic information reference in the "memory characteristic information reference process" is different from that of the first embodiment. A specific processing procedure of the "memory characteristic information reference process" in the present embodiment is as follows.

Note, however, that in the remote memory initialization process in the present embodiment, holding of memory characteristic information (S510) is not performed.

(S901) In the wireless memory access apparatus 1, the first application controller 101 requests the first memory initialization/access controller 103 to refer to memory characteristic information.

(S902) When the first memory initialization/access controller 103 in the wireless memory access apparatus 1 is requested by the first application controller 101 to refer to memory characteristic information, the first memory initialization/access controller 103 requests the second memory initialization/access controller 203 in the wireless memory recording apparatus 2 to refer to memory characteristic information.

(S903) When the second memory initialization/access controller 203 is requested by the first memory initialization/access controller 103 to refer to memory characteristic information, the second memory initialization/access controller 203 refers to the second memory characteristic information storage 211 in the RAM 22, without requesting the memory controller 26 to obtain memory characteristic information.

(S904) The second memory initialization/access controller 203 in the wireless memory recording apparatus 2 notifies the first memory initialization/access controller 103 in the wireless memory access apparatus 1 of the completion of the memory characteristic information reference process, and transmits the memory characteristic information referred to at S903 to the first memory initialization/access controller 103.

(S905) When the first memory initialization/access controller 103 is notified from the second memory initialization/access controller 203 about the completion of the memory characteristic information reference process, the first memory initialization/access controller 103 notifies the first application controller 101 of the completion of the memory characteristic information reference process, and transmits the memory characteristic information transmitted from the second memory initialization/access controller 203 at step S904, to the first application controller 101. By this, the memory characteristic information reference process ends.

The memory characteristic information reference process shown in Fig. 9 (present embodiment) is different from the memory characteristic information reference process shown in Fig. 7 (first embodiment) in a memory initialization/access controller that holds and refers to memory characteristic information. Specifically, in the memory characteristic information reference process shown in Fig. 7, the first memory initialization/access controller 103 holds and refers to memory characteristic information; on the other hand, in the memory characteristic information reference process shown in Fig. 9, the second memory initialization/access controller 203 holds and refers to memory characteristic information. In the present embodiment in which the second memory initialization/access controller 203 holds and refers to memory characteristic information, it is assumed that, as described previously, holding of memory characteristic information at step S510 in Fig. 5 is not performed.

Namely, in the present embodiment, the first memory initialization/access controller 103 is configured as a simple controller that performs only issuing of various types of requests and obtaining of responses, and the registration and management of memory characteristic information are performed by the second memory initialization/access controller 203. By doing so, the first memory characteristic information storage 111 becomes unnecessary, which in turn enables to reduce the number of resources of the wireless memory access apparatus 1, and simplifies processes.

Note, however, that in the present embodiment, for memory characteristic information reference from steps S902 to S904 in Fig. 9, access from the wireless memory access apparatus 1 to the wireless memory recording apparatus 2 takes place. Hence, there is a possibility that the processing time for a memory characteristic information reference process may increase. Thus, there is an advantage in performing the present embodiment instead of the first embodiment when the wireless memory access apparatus 1 needs to be configured simply even with some sacrifice in the processing time for a memory characteristic information reference process.

Performing a memory characteristic information reference process in the above-described manner enables the wireless memory access apparatus 1 to be configured simply.

Note that the configurations of the wireless memory recording device 2 and the wireless memory access apparatus 1 described in the present embodiment are an example, and thus may be modified without departing from the spirit and scope of the present embodiment. For example, various variants described in the first embodiment may be applied to the present embodiment.

### 3. Overall Summary

As described above, in the first and second embodiments, as an example of an access system, a wireless memory control system including a wireless memory access apparatus 1 and a wireless memory recording device 2 is described. The wireless memory access apparatus 1 is an example of an access apparatus, and the wireless memory recording device 2 is an example of a functional device.

The second memory initialization/access controller 203 of the wireless memory recording device 2 is an example of an access controller of a functional device, the second memory characteristic information storage 211 is an example of a memory, the wireless communication unit 25 is an example of a communication unit, and the second application controller 201 is an example of a communication controller.

The access controller of the functional device controls the function of the additional device, and obtain the characteristic information of the additional device at an initialization process of the additional device. The memory holds (records) the characteristic information obtained by the access controller. The communication unit establishes a communication connection with the access apparatus, and transmits and receives data to and from the access apparatus. The communication controller manages the access right (exclusive right) to exclusively control the function of the additional device, and transfers the exclusive right to the access apparatus in response to a request from the access apparatus. When receiving a request for an additional device initialization process from the access apparatus having obtained the exclusive right, the communication controller transmits the characteristic information stored in the memory to the access apparatus. At this time, the communication controller does not perform an initialization process of the functional device in practice.

The communication controller has already completed the actual initialization process of the functional device before, for example, transferring the exclusive right to the access apparatus. The characteristic information of the additional device obtained at the initialization process is recorded in the memory. Hence, even if receiving a request for an initialization process again from the access apparatus, without performing an initialization process in practice, the communication controller transmits the characteristic information obtained at the initialization process to the access apparatus.

By this, the access apparatus can obtain the same results (characteristic information) as those obtained by the functional device performing an initialization process according to a request. On the other hand, once the functional device has completed an initialization process, the functional device does not need to repeat an unnecessary initialization process again and again.

Effects such as those described above enable to reduce the number of unnecessary initialization processes when temporary disconnection of wireless communication occurs at relatively high frequency particularly in a connection mode where the access apparatus and the functional device are not directly connected to each other by an electrical wiring line or the like, e.g., a connection mode like wireless communication.

### Industrial Applicability

The arts of the present disclosure is arts that can be used for, for example, remote access where a host apparatus and a functional device are connected to each other through wireless communication, or the like.

## Claims

1. A functional device capable of communicating with an access apparatus, the functional device comprising:
an access controller that controls an additional device and obtains characteristic information of the additional device at an initialization process of the additional device;
a memory that stores the obtained characteristic information;
a communication unit that transmits and receives data to and from the access apparatus; and
a communication controller that transmits the characteristic information stored in the memory to the access apparatus, when receiving a request for the initialization process from the access apparatus through the communication unit after transferring an exclusive right to the access apparatus, the exclusive right being a right to exclusively control the additional device.

2. The functional device according to claim 1, wherein
when the additional device is a nonvolatile memory, the characteristic information is register information directly obtained from the nonvolatile memory.

3. The functional device according to claim 1 or 2, wherein the characteristic information includes information of which value changes every time the initialization process of the function is performed.

4. An access apparatus capable of communicating with a functional device that controls an additional device, the access apparatus comprising:
a communication unit that transmits and receives data to and from the functional device;
a communication controller that controls the communication unit to establish communication with the functional device and obtains an exclusive right from the functional device, the exclusive right being a right to exclusively control the additional device; and
an access controller that obtains characteristic information of the additional device from the functional device by transmitting a request for an initialization process to the functional device after the communication controller obtains the exclusive right.

5. The access apparatus according to claim 4, wherein
when the additional device is a nonvolatile memory, the characteristic information is register information directly obtained from the nonvolatile memory.

6. The access apparatus according to claim 4 or 5, wherein the characteristic information includes information of which value changes every time the initialization process of the functional device is performed.

7. An access system comprising a functional device that controls an additional device; and an access apparatus, wherein
the access apparatus comprises:
a first communication unit that transmits and receives data to and from the functional device;
a first communication controller that controls the first communication unit to establish communication with the functional device and obtains an exclusive right from the functional device, the exclusive right being a right to exclusively control the additional device; and
a first access controller that obtains characteristic information of the additional device from the functional device by transmitting a request for an initialization process to the functional device after the first communication controller obtains the exclusive right, and
the functional device comprises:
a second access controller that controls the additional device and obtains characteristic information of the additional device at the initialization process of the additional device;
a memory that stores the obtained characteristic information;
a second communication unit that transmits and receives data to and from the access apparatus; and
a second communication controller that transmits the characteristic information stored in the memory to the access apparatus, when receiving a request for the initialization process from the access apparatus through the second communication unit after transferring the exclusive right to the access apparatus, the exclusive right being a right to exclusively control the additional device.

8. A communication establishing method in which a functional device capable of communicating with an access apparatus establishes communication between the access apparatus and the functional device, the method comprising:
controlling an additional device to obtain characteristic information of the additional device at an initialization process of the additional device;
storing the obtained characteristic information;
transmitting and receiving data to and from the access apparatus; and
transmitting the characteristic information stored in the memory to the access apparatus, when receiving a request for the initialization process from the access apparatus through the communication unit after transferring an exclusive right to the access apparatus.
